# EUROPÄISCHE PATENTSCHRIFT

(11) **EP 1 419 070 B1**
(45) Veröffentlichungstag und Bekanntmachung des Hinweises auf die Patenterteilung: **19.10.2005**
(21) Anmeldenummer: 02796253.9
(22) Anmeldetag: 21.08.2002
(51) Int. Cl.: B60R 21/20

(54) **AIRBAGVORRICHTUNG UND VERFAHREN ZUM ÖFFNEN EINER AIRBAGKLAPPE**
AIRBAG DEVICE AND METHOD FOR OPENING AN AIRBAG FLAP
SYSTEME DE COUSSIN GONFLABLE DE SECURITE ET PROCEDE DESTINE A OUVRIR UN CLAPET DE COUSSIN GONFLABLE DE SECURITE

(30) Priorität: 23.08.2001 DE 10140382
(43) Veröffentlichungstag der Anmeldung: 19.05.2004
(73) Patentinhaber: Faurecia Innenraum Systeme GmbH, 76767 Hagenbach (DE)
(72) Erfinder: LOEPER, Dieter, 76227 Karlsruhe (DE); FISCHER, Michael, 76767 Hagenbach (DE)
(74) Vertreter: Richardt, Markus Albert
(86) Internationale Anmeldenummer: PCT/EP2002/009338
(87) Internationale Veröffentlichungsnummer: WO 2003/018370

(56) Entgegenhaltungen:
- DE-A- 19 724 594
- DE-A- 19 855 909
- DE-A- 19 934 600
- DE-C- 10 001 040

## Beschreibung

Die Erfindung betrifft eine Airbagvorrichtung und ein Verfahren zum Öffnen einer Airbagklappe, insbesondere für die Anwendung in einem Kraftfahrzeug.

Aus dem Stand der Technik sind verschiedene Airbaganordnungen bekannt:

Aus der DE 198 55 909 A ist eine Airbagvorrichtung gemäß dem Oberbegriff des Anspruchs 1 und ein Verfahren gemäß dem Oberbegriff des Anspruchs 9 bekannt.

Aus der DE 196 46 543 ist ein Innenverkleidungsteil für Kraftfahrzeuge mit Airbag-Ausrüstung bekannt. Bei der Auslösung des Airbags wird der Abdeckbereich des Führungskanals längs seiner Mittellinie aufgerissen Der aufgerissene Bereich öffnet sich in Form eines "spitzen Ovals", ähnlich der Form eines geöffneten Fischmauls.

Aus den Druckschriften DE 100 01 040 C1, DE 38 43 686 A1, DE 40 22 881 C2 und EP 0 940 300 A1 sind verschiedene weitere Airbag-Abdeckungen bekannt, die im Auslösefall in den Fahrgastraum hineingeschleudert werden, wobei die Bewegung der Abdeckung durch ein Rückhalteband begrenzt wird. Ein gemeinsamer Nachteil ist hierbei, dass durch den Eintritt der Abdeckung in den Fahrgastraum eine Verletzungsgefahr besteht.

Aus der EP 0 867 346 A1 ist eine Airbagvorrichtung und ein entsprechendes Verfahren zum Auslösen der Airbagvorrichtung bekannt, bei dem eine Abdeckung der Austrittsöffnung des Airbags im wesentlichen innerhalb einer Außenkontur der Airbagvorrichtung oder eines die Airbagvorrichtung enthaltenden Fahrzeugteils im Auslösefall bewegt wird. Diese Art der Bewegung erfordert allerdings eine aufwendige Kulissenführung für die Bewegung der Abdeckeinrichtung innerhalb der Außenkontur.

Der Erfindung liegt daher die Aufgabe zugrunde, eine verbesserte Airbagvorrichtung und ein verbessertes Verfahren zum Öffnen einer Airbagklappe zu schaffen.

Die der Erfindung zugrundeliegende Aufgabe wird jeweils mit den Merkmalen der unabhängigen Patentansprüche gelöst. Bevorzugte Ausführungsformen der Erfindung sind in den abhängigen Patentansprüchen angegeben.

Ein besonderer Vorteil der Erfindung ist darin zu sehen, dass die Bewegung der Airbagklappe zur Freigabe der Austrittsöffnung des Airbags nach einer Auslösung definiert im wesentlichen außerhalb des Fahrgastbereichs des Fahrzeugs verläuft. Dadurch ist im Vergleich zum Stand der Technik eine vergrößerte Sicherheit gegeben, da die sich öffnende Airbagklappe kein Verletzungsrisiko für Personen in dem Fahrzeuginnenraum darstellt, insbesondere auch dann nicht, wenn sich zum Beispiel der Beifahrer in einer sogenannten Out Off Position Lage befindet. Dadurch, dass die Öffnungsbewegung der Airbagklappe im wesentlichen außerhalb des Fahrgastraumes ablaufen kann, ist insbesondere auch bei Out Off Position die Gefahr von Kopfverletzungen durch die sich öffnende Airbagklappe minimiert.

Ein weiterer besonderer Vorteil der Erfindung ist, dass sich die definierte Öffnungsbewegung der Airbagklappe ohne eine Kulissenführung oder dergleichen erreichen lässt, sondern durch eine rotatorische Bewegung z.B. um eine der Austrittsöffnung gegenüberliegende Achse.

Nach der Erfindung sind zwei Airbagklappen vorgesehen, die in geschlossener Position einen sich auf die Austrittsöffnung hin verjüngenden Raum bilden, in den sich der Airbag hinein entfalten kann. Bei einer Entfaltung des Airbags in diesen Raum hinein wird auf beide Airbagklappen ein Druck ausgeübt, so dass diese rotatorische Bewegungen in entgegengesetzte Drehrichtungen ausführen. Auf diese Art und Weise werden die Airbagklappen zumindest teilweise unter eine Instrumententafel verschoben, so dass die Airbagöffnung freigegeben wird.

Nach einer weiteren bevorzugten Ausführungsforin der Erfindung ist eine Zierblende auf der Airbagklappe angeordnet. Zwischen einer Berandung der Instrumententafel und einer Berandung der Airbagklappe ist eine Lücke vorgesehen, durch die sich die Zierblende hindurch auf die Unterseite der Instrumententafel kurvenförmig erstreckt. Durch die Kurvenform der Zierblende in deren Endbereich wird das Unterfahren der Instrumententafel bei der Öffnungsbewegung unterstützt.

Nach einer weiteren bevorzugten Ausführungsform der Erfindung ist der Endbereich der Zierblende auf der Innenseite der Instrumententafel lösbar fixiert. Dadurch ist sichergestellt, dass die Zierblende auch bei nachlassender Klemmwirkung, zum Beispiel infolge von Alterungserscheinungen des Materials, in der Austrittsöffnung optisch dasselbe Erscheinungsbildung behält. Nach einem Auslösen des Airbags wird diese Verbindung gelöst, zum Beispiel aufgebrochen.

Nach einer weiteren bevorzugten Ausführungsform der Erfindung besteht zwischen den beiden Airbagklappen im geschlossenen Zustand ein Abstand. Oberhalb dieses Abstands weist die Zierblende eine Sollbruchstelle auf. Nach dem Auslösen des Airbags wirkt der entsprechende Druck deshalb unmittelbar auf die Sollbruchstelle, so dass diese besonders leicht aufreißen kann. Die Sollbruchstelle kann beispielsweise durch Schwächung des Materials der Zierblende, insbesondere durch Schwächung mittels eines Laserstrahls, erzeugt werden.

Nach einer weiteren bevorzugten Ausführungsform der Erfindung werden die entgegengesetzten rotatorischen Bewegungen der beiden Airbagklappen seitlich durch das Airbaggehäuse begrenzt. Nach dem Auslösen des Airbags wird durch die Airbagklappen an dem Airbaggehäuse jeweils ein Anschlag gebildet. Dadurch ist eine definierte Endposition der geöffneten Airbagklappen ausserhalb des Fahrgastraums gegeben.

Im weiteren werden bevorzugte Ausführungsformen der Erfindung mit Bezugnahme auf die Zeichnungen näher erläutert. Es zeigen:
- Figur 1: eine erste Ausführungsform einer erfindungsgemäßen Airbagvorrichtung in geschlossenem Zustand,
- Figur 2: die Airbagvorrichtung der Figur 1 nach dem Auslösen des Airbags,
- Figur 3: eine zweite Ausführungsform einer erfindungsgemäßen Airbagvorrichtung im geschlossenen Zustand und nach dem Auslösen,
- Figur 4: den Schnitt A-A der Figur 3.

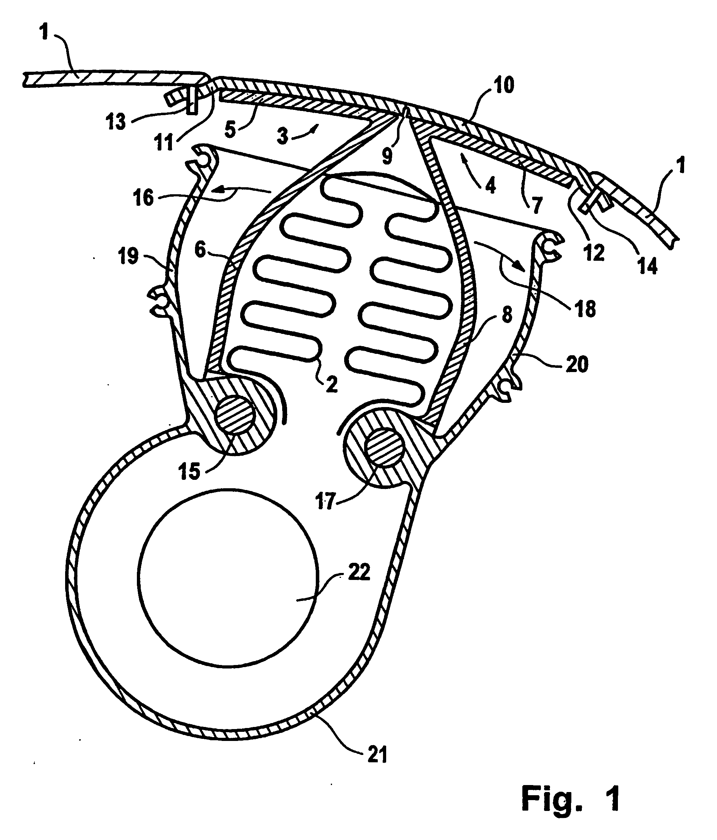

Die Figur 1 zeigt eine Instrumententafel 1 eines Fahrzeugs, insbesondere eines Personenkraftfahrzeugs. Die Instrumententafel 1 hat eine Austrittsöffnung für einen Airbag 2. Die Austrittsöffnung für den Airbag 2 kann auch in einem anderen Teil der Fahrzeuginnenraumverkleidung vorgesehen sein.

Der Airbag 2 befindet sich in einem u.a. durch die Airbagklappen 3 und 4 begrenzten Raum. Der durch die Airbagklappen 3 und 4 begrenzte Raum verjüngt sich in Richtung auf die Austrittsöffnung und ist zum Beispiel im wesentlichen trichterförmig ausgebildet.

Die Airbagklappe 3 hat einen Bereich 5 zur Abdeckung der einen Seite der Austrittsöffnung. Ferner hat die Airbagklappe 3 einen Bereich 6, der eine Berandung des sich in Richtung auf die Austrittsöffnung verjüngenden Raum bildet. Entsprechend hat die Airbagklappe 4 einen Bereich 7 zur Abdeckung der anderen Seite der Austrittsöffnung und einen Bereich 8, der den sich verjüngenden Raum auf der anderen Seite begrenzt.

Die Bereiche 6 und 8 der Airbagklappen 3 und 4 verlaufen in Richtung auf die Austrittsöffnung aufeinander zu, ohne sich jedoch zu berühren. Zwischen den Bereichen 6 und 8 verbleibt also auch unmittelbar an der Austrittsöffnung ein Abstand. Oberhalb dieses Abstands befindet sich eine Sollbruchstelle 9 einer Zierblende 10. Die Sollbruchstelle 9 wird beispielsweise mittels Laserschwächung der Zierblende 10 hergestellt.

Die Zierblende 10 erstreckt sich über den gesamten Bereich der Austrittsöffnung und ist mit den Bereichen 5 und 7 der Airbagklappen 3 und 4 fest verbunden.

Die Zierblende 10 hat Endbereiche 11 und 12. Der Endbereich 11 ist durch einen zwischen dem Rand der Instrumententafel 1 und dem Rand des Bereichs 5 bestehenden Abstand hindurch auf die Rückseite der Instrumententafel 1 geführt. Dadurch erhält der Endbereich 11 eine kurvenförmige Gestalt. Auf der Unterseite der Instrumententafel 1 ist der Endbereich 11 mit einem Befestigungselement 13 an der Unterseite der Instrumententafel 1 lösbar befestigt. Bei dem Befestigungselement 13 kann es sich beispielsweise um eine Clipverbindung oder einen Kunststoffbolzen handeln.

Entsprechend ist der Endbereich 12 durch den zwischen dem Rand des Bereichs 7 und dem Rand der Instrumententafel 1 gebildeten Abstand hindurch auf die Rückseite der Instrumententafel 1 geführt und dort mit einem Befestigungselement 14 an der Rückseite der Instrumententafel 1 befestigt.

Die Airbagklappe 3 ist an einem Gelenk 15 angeordnet, welches im Auslösefall eine Schwenkbewegung der Airbagklappe 3 in Pfeilrichtung 16 ermöglicht. Das Gelenk 15 befindet sich gegenüber der Austrittsöffnung des Airbags.

Entsprechend befindet sich die Airbagklappe 4 an einem Gelenk 17, welches eine Schwenkbewegung in Pfeilrichtung 18 für den Auslösefall erlaubt. Das Gelenk 17 befindet sich ebenfalls gegenüber der Austrittsöffnung des Airbags.

Die Airbagvorrichtung der Figur 1 hat ferner ein Gehäuse mit den beiden seitlichen Gehäuseteilen 19 und 20. Die rotatorische Bewegung der Airbagklappe 3 in Pfeilrichtung 16 wird im Auslösefall durch einen mit dem Gehäuseteil 19 gebildeten Anschlag begrenzt, ebenso wie die entsprechende Bewegung der Airbagklappe 4 durch einen an dem Gehäuseteil 20 gebildeten Anschlag begrenzt wird. Die entsprechenden Anschläge werden dabei durch den Bereich 6 bzw. den Bereich 8 der Airbagklappe 3 bzw. 4 gebildet.

In einem unteren Bereich 21 der Airbagvorrichtung befindet sich ein Gasgenerator 22 für die Entfaltung des Airbags 2 im Auslösefall.

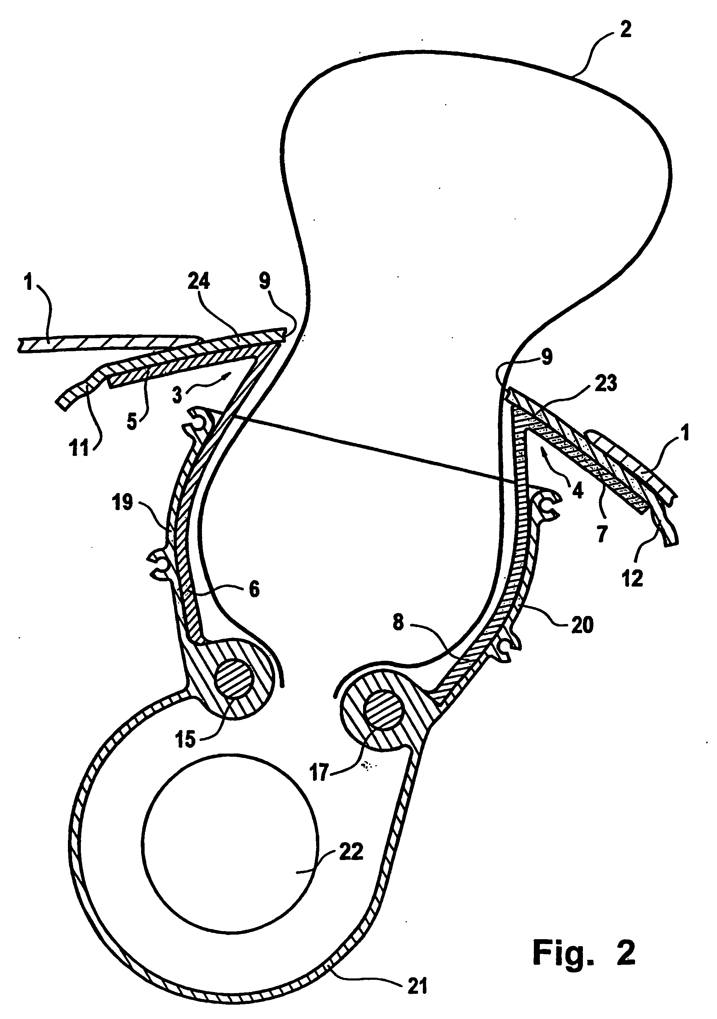

Die Figur 2 zeigt die Airbagvorrichtung der Figur 1 nach einer Auslösung des Airbags. Elemente der Figur 2, die Elementen der Figur 1 entsprechen, sind mit denselben Bezugszeichen bezeichnet.

In der Darstellung der Figur 2 ist der Airbag 2 ausgelöst worden, indem der Gasgenerator 2 schlagartig ein Gas für die Expansion des Airbags 2 erzeugt hat. Durch das Einströmen des Gases in den Airbag 2 hat dieser einen Druck auf die Bereiche 6 und 8 der Airbagklappen 3 und 4 erzeugt (vgl. Figur 1). Ebenso ist hierdurch ein Druck auf die Sollbruchstelle 9 erzeugt worden.

Hierdurch ist die Sollbruchstelle 9 der Zierblende 10 (vgl. Figur 1) aufgebrochen worden, so dass die Zierblende 10 in die beiden Bereiche 23 und 24 unterteilt worden ist. Durch den Expansionsdruck des Airbags 2 haben die Airbagklappen 3 und 4 eine Schwenkbewegung in die Pfeilrichtung 16 bzw. 18 (vgl. Figur 1) ausgeführt und bilden dann in der in der Figur 2 gezeigten Endposition Anschläge mit ihren Bereichen 6 und 8 an den Gehäuseteilen 19 bzw. 20.

Die Bereiche 5 und 7 der Airbagklappen 3 bzw. 4 haben bei dieser Öffnungsbewegung zusammen mit den Bereichen 24 bzw. 23 der Zierblende die jeweilige Kante der Instrumententafel 1 unterfahren, wobei die Befestigungselemente 13 und 14 (vgl. Figur 1) gelöst worden sind, also z.B. aufgebrochen worden sind. Das Unterfahren ist dabei durch die kurvenförmige Gestaltung der Endbereiche 11 und 12 der Zierblende 10 unterstützt worden. Zusätzlich kann es bei dem Unterfahren der Instrumententafel 1 zu einer elastischen Verformung der Instrumententafel 1 infolge der Klemmwirkung der die Instrumententafel 1 unterfahrenden Airbagklappe 3 bzw. 4 kommen.

Von besonderem Vorteil ist hierbei, dass die Öffnungsbewegung der Airbagklappen 3 und 4 im wesentlichen außerhalb des Fahrgastraums verläuft. Dadurch ist das Verletzungsrisiko der Fahrzeuginsassen minimiert. Ferner ist besonders vorteilhaft, dass diese Bewegung ohne eine aufwendige Kulissenführung oder dergleichen im wesentlichen nur mittels einer Schwenkbewegung um die Gelenke 15 bzw. 17 realisiert wird.

Allerdings dringen die Airbagklappen 3 und 4 in der gezeigten Ausführungsform bei der Öffnungsbewegung nach dem Auslösen zunächst um einen geringen Betrag in den Fahrzeuginnenraum ein und werden danach wieder aus dem Fahrzeuginnenraum beim Unterfahren der Instrumententafel fast zur Gänze herausgezogen. Dies ist durch die unterschiedlichen Krümmungsradien der Einhüllenden der Instrumententafel und der Öffnungsbewegung begründet Dieses geringe Eindringen in den Fahrgastraum stellt jedoch keinerlei Beeinträchtigung der Sicherheit der Insassen des Fahrzeugs dar. Entsprechend sind Ausführungsformen mit nur einer Airbagklappe und/oder einem anderen Teil der Fahrzeuginnenverkleidung anstelle der Instrumententafel realisierbar.

Die Erfindung hat den weiteren Vorteil, dass zum Beispiel ein Verklemmen der sich öffnenden Airbagklappe in einer Kulissenführung vermeidbar ist. Der Vorgang der Entfaltung des Airbags läuft also zugleich nach einem genau vorbestimmten Bewegungsablauf ab und ist doch zugleich lediglich mittels zweier Schwenkbewegungen realisiert. Dabei ist von weiterem besonderen Vorteil, dass die Schwenkbewegung nur einen relativ geringen Energieanteil des von dem Gasgenerators 22 gelieferten Drucks benötigt, so dass die Expansion des Airbags 2 nicht wesentlich verlangsamt wird oder ein besonders großer Gasgenerator 22 erforderlich wäre.

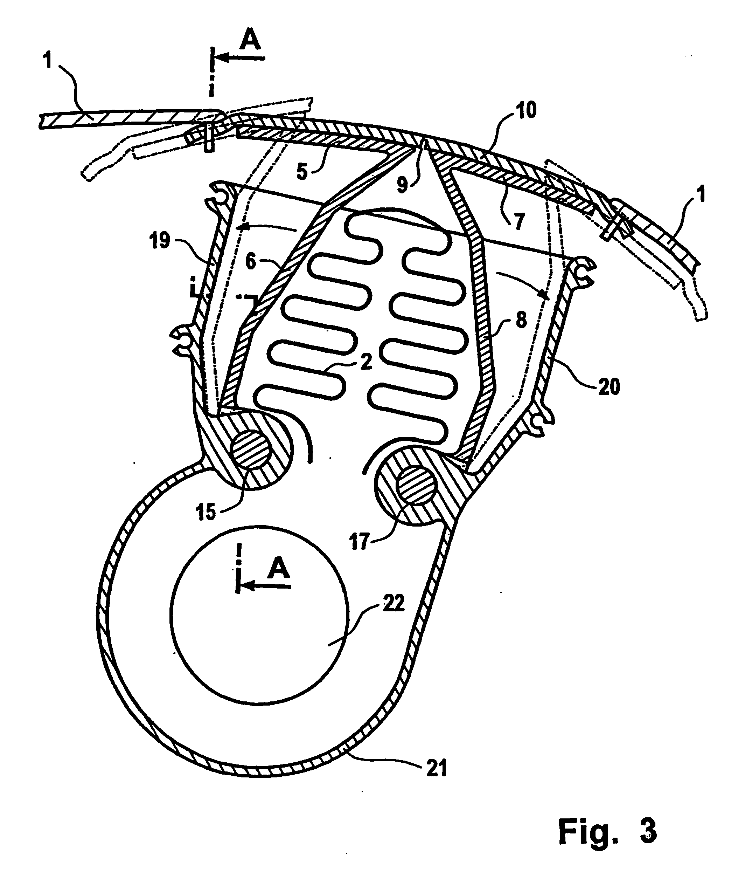

Die Figur 3 zeigt eine zweite Ausführungsform einer erfindungsgemäßen Airbagvorrichtung. In der Ausführungsform der Figur 3 sind wiederum Elemente, die Elementen der Figuren 1 und 2 entsprechen, mit denselben Bezugszeichen bezeichnet.

Die Ausführungsform der Figur 3 unterscheidet sich von der Ausführungsform der Figuren 1 und 2 im wesentlichen dadurch, dass die Form der Bereiche 6 und 8 der Airbagklappen abschnittsweise gerade verlaufen. Auch bei dieser Ausführungsform ist jedoch der durch die Bereiche 6 und 8 umschriebene Raum verjüngend in Richtung der Austrittsöffnung des Airbags 2.

Die geöffnete Position ist in der Figur 3 gestrichelt dargestellt.

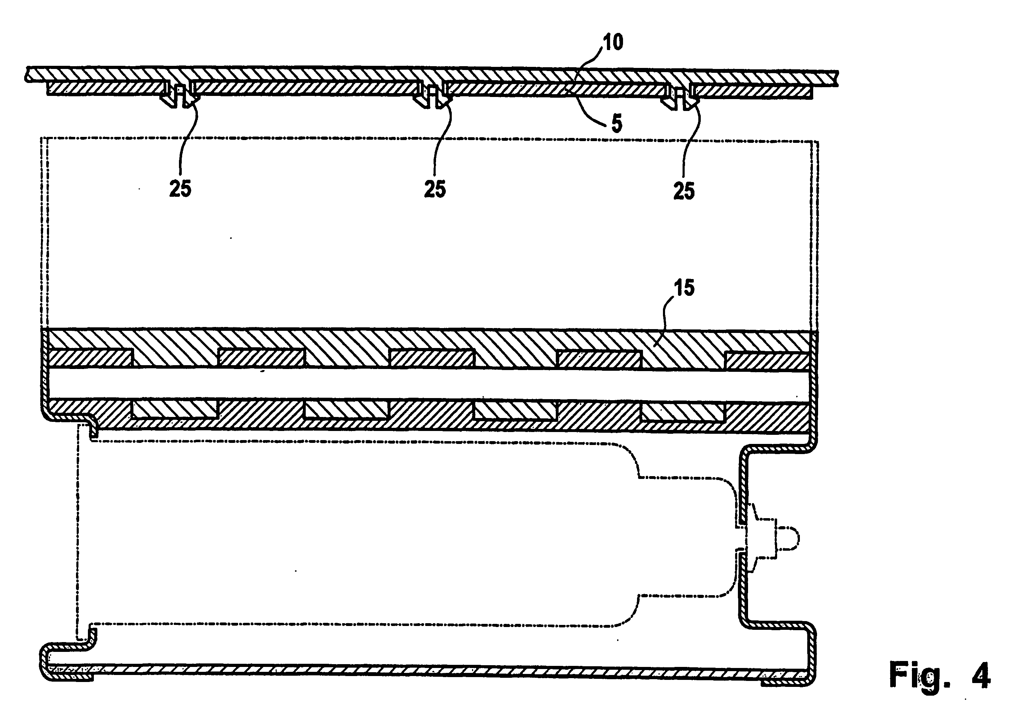

Die Figur 4 zeigt den Schnitt A-A der Figur 3. Wie aus dieser Darstellung hervorgeht, ist das Gelenk 15 als Scharnier ausgebildet. Die Zierblende 10 ist mit dem Bereich 5 der Airbagklappe 3 (mittels Befestigungselementen 25) formschlüssig verbunden.

### Bezugszeichenliste

- 1: Instrumententafel
- 2: Airbag
- 3: Airbagklappe
- 4: Airbagklappe
- 5: Bereich
- 6: Bereich
- 7: Bereich
- 8: Bereich
- 9: Sollbruchstelle
- 10: Zierblende
- 11: Endbereich
- 12: Endbereich
- 13: Befestigungselement
- 14: Befestigungselement
- 15: Gelenk
- 16: Pfeilrichtung
- 17: Gelenk
- 18: Pfeilrichtung
- 19: Gehäuseteil
- 20: Gehäuseteil
- 21: unterer Bereich
- 22: Gasgenerator
- 23: Bereich
- 24: Bereich
- 25: Befestigungselemente

## Patentansprüche

1. Airbagvorrichtung mit einer ersten und einer zweiten Airbagklappe (3, 4), mit folgenden Merkmalen:
a) die Airbagklappen (3, 4) weisen jeweils einen ersten Bereich (5, 7) zur Abdeckung einer Austrittsöffnung eines Airbags (2) auf,
b) die Airbagklappen (3, 4) weisen jeweils einen zweiten Bereich (6, 8) auf, der einen Raum zur Aufnahme des Airbags (2) bildet,
c) der zweiten Bereiche (6, 8) der Airbagklappen (3, 4) sind jeweils an deren der Austrittsöffnung abgewandeten Ende an einem Gelenk (15, 17) gelagert,
d) der Airbag (2) übt nach einer Auslösung desselben beim Entfalten einen Druck auf die zweiten Bereiche (6, 8) der Airbagklappen (3, 4) aus, so dass die Airbagklappen (3, 4) um das Gelenk (15, 17) eine im wesentlichen rotatorische Bewegung (16, 18) zur Freigabe der Austrittsöffnung durchführen,
e) die ersten Bereiche (5, 7) der Airbagklappen (3, 4) sind bei der Auslösung des Airbags (2) infolge der im wesentlichen rotatorischen Bewegung zumindest teilweise unter eine Instrumententafel (1) oder ein anderes Teil einer Fahrzeuginnenraumverkleidung schiebbar;
**dadurch gekennzeichnet, daß**
sich der Raum zur Aufnahme des Airbags im geschlossenen Zustand der Airbagklappe (3, 4) auf die Austrittsöffnung hin verjüngt.

2. Airbagvorrichtung nach Anspruch 1, bei der die ersten Bereiche der Airbagklappen eine Zierblende (10) aufweisen, und die Zierblende zusammen mit den ersten Bereichen (5, 7) bei der Auslösung, zumindest teilweise, unter eine Instrumententafel (1) oder ein anderes Teil einer Fahrzeuginnenraumverkleidung geschoben wird.

3. Airbagvorrichtung nach Anspruch 2, bei der im geschlossenen Zustand zwischen einer Berandung der ersten Bereiche (5, 7) und einer Berandung der Instrumententafel (1) ein Abstand gebildet wird und ein Endbereich (11, 12) der Zierblende (10) durch den Abstand hindurch zu der Hinterseite der Instrumententafel (1) oder des Teils der Fahrzeuginnenraumverkleidung verläuft.

4. Airbagvorrichtung nach Anspruch 3, bei der der Endbereich der Zierblende (10) an seiner dem Rand der Instrumententafel zugewandten Seite einen kurvenförmigen Verlauf aufweist, um ein Unterfahren der ersten Bereiche zusammen mit der Zierblende (10) unter den Rand der Instrumententafel oder unter den anderen Teil der Fahrzeuginnenraumverkleidung nach einer Auslösung zu unterstützen.

5. Airbagvorrichtung nach einem der vorhergehenden Ansprüche 1 bis 4, wobei die zweite Airbagklappe (4) so ausgebildet ist, dass die zweite Airbagklappe (4) im wesentlichen eine rotatorische Bewegung (18) zur Freigabe der Austrittsöffnung in eine der rotatorischen Bewegung (16) der ersten Airbagklappe (3) entgegengesetzte Richtung durchführen kann.

6. Airbagvorrichtung nach einem oder mehreren der Ansprüche 1 bis 5, bei der der Raum im wesentlichen trichterförmig ausgebildet ist.

7. Airbagvorrichtung nach einem oder mehreren der Ansprüche 1 bis 6, bei der ein Abstand zwischen dem ersten Bereich der ersten Airbagklappe (3) und dem ersten Bereich der zweiten Airbagklappe (4) im geschlossenen Zustand verbleibt und oberhalb des Abstands eine Sollbruchstelle einer den ersten Bereich der ersten Airbagklappe und den ersten Bereich der zweiten Airbagklappe überdeckenden Zierblende (10) angeordnet ist.

8. Airbagvorrichtung nach einem der vorhergehenden Ansprüche 1 bis 7, mit einem Gehäuse (19, 20) zur Aufnahme der Airbagklappen, so dass die rotatorische Bewegung der ersten Airbagklappe durch einen Anschlag an dem Gehäuse begrenzt ist.

9. Verfahren zum Öffnen einer Airbagklappe, die erste Bereiche zur Abdeckung einer Austrittsöffnung des Airbags und zweite Bereiche, auf den ein sich nach einer Auslösung entfaltender Airbag einen Druck ausübt, aufweist, wobei durch die zweiten Bereiche ein Raum zur Aufnahme des Airbags gebildet wird, mit folgenden Schritten:
- Auslösen des Airbags,
- Ausübung eines Drucks auf die zweiten Bereiche der Airbagklappen durch den sich entfaltenden Airbag,
- Durchführung einer rotatorischen Bewegung der Airbagklappen zur Freigabe der Austrittsöffnung;
**dadurch gekennzeichnet, daß**
sich der Raum zur Aufnahme des Airbags im geschlossenen Zustand der Airbagklappen auf die Austrittsöffnung hin verjüngt.

10. Verfahren nach Anspruch 9, wobei die rotatorische Bewegung um eine an einen der Austrittsöffnung abgewandten Ende der zweiten Bereiche liegende Achse ausgeführt wird.

11. Verfahren nach Anspruch 9 oder 10, wobei die ersten Bereiche zumindest teilweise bei der Auslösung unter eine Instrumententafel oder ein anderes Teil einer Fahrzeuginnenverkleidung geschoben werden.

12. Verfahren nach Anspruch 9, 10 oder 11, wobei eine Zierblende der ersten Bereiche mit unter die Instrumententafel geschoben wird.

13. Verfahren nach einem der vorhergehenden Ansprüche 9 bis 12, wobei sich der Airbag nach der Auslösung in den Raum hinein entfaltet, so dass die Airbagklappen im wesentlichen rotatorische Bewegungen entgegengesetzter Richtungen zur Freigabe der Austrittsöffnung durchführen.

14. Verfahren nach Anspruch 13, wobei in geschlossenem Zustand zwischen den Airbagklappen ein Abstand verbleibt und die über den ersten Bereichen verlaufende Zierblende über dem Abstand eine Sollbruchstelle aufweist, so dass nach der Auslösung die Zierblende durch den Druck des sich entfaltenden Airbags an der Sollbruchstelle aufgetrennt wird.

15. Verfahren nach einem der vorhergehenden Ansprüche 9 bis 14, wobei die Bewegung zumindest der ersten Airbagklappe durch ein Airbaggehäuse begrenzt wird.

16. Verfahren nach einem der vorhergehenden Ansprüche 9 bis 15, wobei die Zierblende in einem Endbereich lösbar mit einer Unterseite der Instrumententafel verbunden ist, so dass nach dem Auslösen die lösbare Verbindung aufgebrochen wird, so dass die Zierblende zusammen mit dem ersten Bereich, zumindest teilweise, unter die Instrumententafel oder das Teil der Fahrzeuginnenverkleidung geschoben wird.

17. Verfahren nach einem der vorhergehenden Ansprüche 9 bis 16, bei dem die Bewegung zumindest der ersten Airbagklappe nach der Auslösung im wesentlichen außerhalb des Fahrgastraums verläuft.

## Claims

1. Airbag device comprising a first and a second airbag flap (3, 4), with the following features:
a) the airbag flaps (3, 4) respectively incorporate a first portion (5, 7) for covering an exit aperture for an airbag (2),
b) the airbag flaps (3, 4) respectively incorporate a second portion (6, 8) which forms a compartment for accommodating the airbag (2),
c) the second portions (6, 8) of the airbag flaps (3, 4) are respectively mounted at the end thereof that lies furthest from the exit aperture, on a joint (15, 17),
d) after a deployment of it, the airbag (2) exerts a pressure on the second portions (6, 8) of the airbag flaps (3, 4) as it unfolds, with the result that the airbag flaps (3, 4) execute a substantially rotatory movement (16, 18) around the joint (15, 17) to expose the exit aperture,
e) during deployment of the airbag (2), the substantially rotatory movement means that the first portions (5, 7) of the airbag flaps (3, 4) can be pushed at least partially under an instrument panel (1) or other part of a vehicle's interior trim;
**characterised in that**
the compartment for accommodating the airbag (2) tapers towards the exit aperture when the airbag flap (3, 4) is in the closed state.

2. Airbag device according to claim 1, **characterised in that** the first portions of the airbag flaps feature a decorative cover (10), and upon deployment the decorative cover is pushed, together with the first portions (5, 7), at least partially under an instrument panel (1) or other part of a vehicle's interior trim.

3. Airbag device according to claim 2, **characterised in that** in the closed state a gap is formed between an edging zone of the first portions (5, 7) and an edging zone of the instrument panel (1) and an end portion (11, 12) of the decorative cover (10) extends through the gap to the reverse face of the instrument panel (1) or part of the vehicle's interior trim.

4. Airbag device according to claim 3, **characterised in that** the end portion of the decorative cover (10) has a curvilinear profile on its side nearest the rim of the instrument panel, in order to help the first portions together with the decorative cover (10) to pass beneath the rim of the instrument panel or beneath the other part of the vehicle's interior trim after a deployment.

5. Airbag device according to any one of the preceding claims 1 to 4, **characterised in that** the second airbag flap (4) is designed in such a way that the second airbag flap (4) can execute substantially a rotatory movement (18) to expose the exit aperture in an opposite direction to the rotatory movement (16) of the first airbag flap (3).

6. Airbag device according to one or more of claims 1 to 5, **characterised in that** the compartment has a substantially funnel-shaped design.

7. Airbag device according to one or more of claims 1 to 6, **characterised in that** in the closed state a gap is left between the first portion of the first airbag flap (3) and the first portion of the second airbag flap (4) and above the gap is arranged a nominal rupture point of a decorative cover (10) covering the first portion of the first airbag flap and the first portion of the second airbag flap.

8. Airbag device according to any one of the preceding claims 1 to 7, having a casing (19, 20) for accommodating the airbag flaps, with the result that the rotatory movement of the first airbag flap is limited by a stop on the casing.

9. Method for opening an airbag flap which has first portions for covering an airbag exit aperture and second portions upon which an airbag unfolding after a deployment exerts a pressure, wherein the second portions form a compartment for accommodating the airbag, comprising the following steps:
- the airbag is deployed,
- the unfolding airbag exerts a pressure on the second portions of the airbag flaps,
- the airbag flaps execute a rotatory movement to expose the exit aperture;
**characterised in that**
the compartment for accommodating the airbag tapers towards the exit aperture when the airbag flaps are in the closed state.

10. Method according to claim 9, **characterised in that** the rotatory movement is executed about an axis lying at an end of the second portions that is furthest from the exit aperture.

11. Method according to claim 9 or 10, **characterised in that** during deployment the first portions are pushed at least partially under an instrument panel or other part of a vehicle's interior trim.

12. Method according to claim 9, 10 or 11, **characterised in that** a decorative cover of the first portions is likewise pushed under the instrument panel.

13. Method according to any one of the preceding claims 9 to12, **characterised in that** after deployment the airbag unfolds into the compartment, with the result that the airbag flaps execute substantially rotatory movements in opposite direction to expose the exit aperture.

14. Method according to claim 13, **characterised in that** in the closed state a gap is left between the airbag flaps and the decorative panel that extends over the first portions incorporates a nominal rupture point over the gap, with the result that after deployment the decorative cover is severed at the nominal rupture point by the pressure of the unfolding airbag.

15. Method according to any one of the preceding claims 9 to 14, **characterised in that** the movement of at least the first airbag flap is limited by an airbag casing.

16. Method according to any one of the preceding claims 9 to 15, **characterised in that** in an end portion the decorative cover is attached to the underside of the instrument panel in a releasable manner, with the result that after deployment the releasable connection is broken, thereby pushing the decorative cover, together with the first portion, at least partially under the instrument panel or the part of the vehicle's interior trim.

17. Method according to any one of the preceding claims 9 to 16, **characterised in that** the movement of at least the first airbag flap extends substantially outside the passenger compartment after deployment.

## Revendications

1. Dispositif d'airbag comportant des premier et deuxième volets d'airbag (3, 4), présentant les caractéristiques suivantes :
a) les volets d'airbag (3, 4) comportent chacun une première région (5, 7) destinée à recouvrir une ouverture de sortie d'un airbag (2),
b) les volets d'airbag (3, 4) comportent chacun une deuxième région (6, 8) qui forme un espace destiné à recevoir l'airbag (2),
c) les deuxièmes régions (6, 8) des volets d'airbag (3,4) sont, chacune, montées sur une articulation (15, 17) à l'extrémité opposée à l'ouverture de sortie,
d) l'airbag (2) exerce lors du dépliage, après son déclenchement, une pression sur les deuxièmes régions (6, 8) des volets d'airbag (3, 4) de sorte que les volets d'airbag (3, 4) réalisent autour de l'articulation (15, 17) un mouvement sensiblement rotatif (16, 18) pour libérer l'ouverture de sortie,
e) les premières régions (5, 7) des volets d'airbag (3, 4) sont mobiles lors du déclenchement de l'airbag (2) à la suite du mouvement sensiblement rotatif au moins partiellement sous un tableau de bord (1) ou une autre partie d'un habillage d'habitacle de véhicule ;
**caractérisé en ce que** l'espace destiné à recevoir l'airbag s'amincit en direction de l'ouverture de sortie lorsque les volets d'airbag (3, 4) sont fermés.

2. Dispositif d'airbag selon la revendication 1, dans lequel les premières régions des volets d'airbag comportent un flasque (10), et le flasque est déplacé conjointement avec les premières régions (5, 7) lors du déclenchement, au moins partiellement, sous un tableau de bord (1) ou une autre partie d'habillage d'habitacle de véhicule.

3. Dispositif d'airbag selon la revendication 2, dans lequel, à l'état fermé, est formée une distance entre une bordure des premières régions (5, 7) et une bordure du tableau de bord (1) et une région d'extrémité (11, 12) du flasque (10) s'étend sur la distance jusqu'au côté arrière du tableau de bord (1) ou de la partie de l'habillage d'habitacle de véhicule.

4. Dispositif d'airbag selon la revendication 3, dans lequel la région d'extrémité du flasque (10) présente, sur son côté qui est dirigé vers le bord du tableau de bord, un aspect incurvé pour favoriser un déplacement des premières régions conjointement avec le flasque (10) sous le bord du tableau de bord ou sous l'autre partie de l'habillage d'habitacle de véhicule, après un déclenchement.

5. Dispositif d'airbag selon l'une des revendications précédentes 1 à 4, dans lequel le deuxième volet d'airbag (4) est conformé de telle sorte que le deuxième volet d'airbag (4) peut réaliser un mouvement sensiblement rotatif (18) destiné à libérer l'ouverture de sortie dans une direction opposée au mouvement rotatif (16) du premier volet d'airbag (3).

6. Dispositif d'airbag selon une ou plusieurs des revendications 1 à 5, dans lequel l'espace est sensiblement conformé en entonnoir.

7. Dispositif selon une ou plusieurs des revendications 1 à 6, dans lequel un espacement entre la première région du premier volet d'airbag (3) et la première région du deuxième volet d'airbag (4) reste à l'état fermé et un endroit de moindre résistance mécanique d'un flasque (10) couvrant la première région du premier volet d'airbag et la première région du deuxième volet d'airbag est placé au-dessus de l'espacement.

8. Dispositif d'airbag selon l'une des revendications précédentes 1 à 7, comportant un boîtier (19, 20) destiné à recevoir les volets d'airbag de sorte que le mouvement rotatif du premier volet d'airbag est limité par une butée au niveau du boîtier.

9. Procédé d'ouverture d'un volet d'airbag qui comporte des premières régions destinées à recouvrir une ouverture de sortie de l'airbag et des deuxièmes régions sur lesquelles un airbag se dépliant après un déclenchement exerce une pression, un espace destiné à recevoir l'airbag étant formé par les deuxièmes régions, ledit procédé comportant les étapes suivantes :
- déclenchement l'airbag,
- exercice d'une pression sur les deuxièmes régions des volets d'airbag par l'airbag qui se déplie,
- réalisation d'un mouvement rotatif des volets d'airbag pour libérer l'ouverture de sortie ;
**caractérisé en ce que** l'espace destiné à recevoir l'airbag s'amincit en direction de l'ouverture de sortie lorsque que les volets d'airbag (3, 4) sont fermés.

10. Procédé selon la revendication 9, dans lequel le mouvement rotatif est réalisé autour d'un axe portant contre une extrémité de la deuxième région qui est opposée à l'ouverture de sortie.

11. Procédé selon la revendication 9 ou 10, dans lequel les premières régions sont déplacées au moins partiellement lors du déclenchement sous un tableau de bord ou une autre partie d'un habillage d'habitacle de véhicule.

12. Procédé selon la revendication 9, 10 ou 11, dans lequel un flasque des premières régions est déplacé sous le tableau de bord.

13. Procédé selon l'une des revendications précédentes 9 à 12, dans lequel l'airbag se déplie dans l'espace après le déclenchement de sorte que les volets d'airbag réalisent des mouvements sensiblement rotatifs dans des directions opposées pour libérer l'ouverture de sortie.

14. Procédé selon la revendication 13, dans lequel un espacement est ménagé à l'état fermé entre les volets d'airbag et le flasque s'étendant au-dessus des premières régions comporte, au-dessus de l'espacement, un endroit de moindre résistance mécanique de sorte que, après le déclenchement, le flasque est sectionné par la pression de l'airbag qui se déplie au niveau de l'endroit de moindre résistance mécanique.

15. Procédé selon l'une des revendications précédentes 9 à 14, dans lequel le mouvement au moins du premier volet d'airbag est limité par un boîtier d'airbag.

16. Procédé selon l'une des revendications précédentes 9 à 15, dans lequel le flasque est relié dans une région d'extrémité de façon amovible à un côté inférieur du tableau de bord de sorte que, après le déclenchement, la liaison amovible est interrompue, de sorte que le flasque est déplacé conjointement avec la première région, au moins partiellement, sous le tableau de bord ou la partie de l'habillage d'habitacle de véhicule.

17. Procédé selon l'une des revendications précédente 9 à 16, dans lequel le déplacement au moins du premier volet d'airbag après le déclenchement est réalisé sensiblement à l'extérieur de l'habitacle.
